# EUROPEAN PATENT APPLICATION

(11) **EP 2 946 898 A1**
(43) Date of publication of application: **25.11.2015**
(21) Application number: 14740210.1
(22) Date of filing: 16.01.2014
(51) Int. Cl.: B29C 33/02, B29C 35/02, C08F 220/12, C08K 3/04, C08K 5/3445, C08L 33/06, B29L 30/00

(54) **BLADDER FOR TIRE VULCANIZATION**

(30) Priority: 17.01.2013 JP 2013005959
(71) Applicant: Denki Kagaku Kogyo Kabushiki Kaisha, Tokyo 103-8338 (JP)
(72) Inventor: IKARI, Satoru, Itoigawa-city Niigata 949-0393 (JP); ABE, Yasushi, Itoigawa-city Niigata 949-0393 (JP); OTSU, Toshiaki, Ichihara-city Chiba 290-8588 (JP); KAWASAKI, Takashi, Ichihara-city Chiba 290-8588 (JP)
(74) Representative: Gulde & Partner
(86) International application number: PCT/JP2014/050713
(87) International publication number: WO 2014/112564

(57) **Abstract**

Provided is a bladder for tire vulcanization superior in heat resistance and having a service time longer than before. A bladder for tire vulcanization prepared from an acrylic rubber composition at least comprising 100 parts by mass of an acrylic rubber containing structural units derived from (meth)acrylic acid alkyl ester in an amount of 94.5 to 99.5 mass % and structural units derived from (meth)acrylic acid alkyl ether in an amount of 0.5 to 5 mass %, 30 to 200 parts by mass of a carbon black having an arithmetical mean particle diameter, as determined according to JIS Z8901, of 20 to 30 nm and a DBP oil absorption of 70 to 130 ml/100 g, and 0.1 to 5 parts by mass of an imidazole compound as crosslinking agent.

## Description

### Technical Field

The present invention relates to a bladder for tire vulcanization. More specifically, it relates to a bladder for tire vulcanization prepared from an acrylic rubber composition.

### Background Art

A bladder for tire vulcanization (hereinafter, referred to simply as bladder) is a bag-shaped molded article inserted inside an unvulcanized rubber for tire (green tire) when the green tire is vulcanized and molded in a mold in tire-producing process (see, for example, Patent Document 1). As described in Patent Document 1, in production of rubber tires for automobiles, motorcycles, bicycles, and others, a green tire is vulcanized, as a bladder is expanded by a fluid such as high-pressure steam or high-temperature gas introduced therein and thus the green tire is pressed to the mold from inside. As a result, the green tire has a tread pattern, side wall, or the like formed thereon. After vulcanization, the mold is disengaged and the bladder is shrunken by release of internal pressure and the tire separated from the mold.

It is desired that such a bladder for tire vulcanization is superior in physical and chemical properties such as mechanical properties and steam resistance and also in durability, separability, and processability (see, for example, Patent Document 2). Mainly, butyl rubbers have been used as the material for such a bladder (see, for example, Patent Document 3). A bladder made of a rubber comprising an ethylene-acrylic polymer and carbon and others blended thereto was also proposed for improvement of durability (see Patent Document 4).

### Citation List

### Patent Literatures

[Patent Document 1] WO No. 2012/053537
[Patent Document 2] JP-A No. H05-31724
[Patent Document 3] JP-A No. H10-130441
[Patent Document 4] JP-A No. 2004-351911

### Summary of Invention

### Technical Problem

However, conventional bladders have a problem that they are insufficient in heat resistance and have thus a short service time. Short service time of bladder leads to increase of the exchange frequency thereof and thus decrease of tire productivity.

Accordingly, an object of the present invention is to provide a bladder for tire vulcanization superior in heat resistance and having a service time longer than before.

### Solution to Problem

After intensive studies to overcome the problem described above, the inventors have found that it is possible to improve the heat resistance and elongate the service time of a bladder for tire vulcanization, by using an acrylic rubber composition that is superior in processing stability and mechanical properties and has a tear strength larger under high-temperature atmosphere and a bending fatigue resistance favorable under high-temperature atmosphere, and made the present invention.

Specifically, the bladder for tire vulcanization according to the present invention is a bladder prepared from an acrylic rubber composition at least comprising 100 parts by mass of an acrylic rubber containing 94.5 to 99.5 mass % of structural units derived from (meth)acrylic acid alkyl ester and 0.5 to 5 mass % of structural units derived from (meth)acrylic acid alkyl ether, 30 to 200 parts by mass of a carbon black having an arithmetical mean particle diameter, as determined according to JIS Z8901, of 20 to 30 nm and a DBP oil absorption of 70 to 130 ml/100 g, and 0.1 to 5 parts by mass of an imidazole compound as crosslinking agent.

The acrylic rubber may comprise additionally structural units derived from ethylene in an amount of 2.5 mass % or less.

The acrylic rubber composition may comprise at least one antioxidant agent selected from amine- and phosphorus-based antioxidant agents in an amount of 0.1 to 10 parts by mass with respect to 100 parts by mass of the acrylic rubber.

The antioxidant agent is at least one compound selected, for example, from 4,4'-α,α-dimethylbenzyldlphenylamine, tris(nonylphenyl)phosphite, triisodecyl phosphite, and dilauryl thiodipropionate.

Alternatively, the (meth)acrylic acid alkyl ether is at least one compound selected, for example, from glycidyl methacrylate, glycidyl acrylate, allyl glycidyl ether, and methallyl glycidyl ether.

50 to 100 mass % of the entire structural units derived from the (meth)acrylic acid alkyl ester in the acrylic rubber may be structural units derived from methyl or ethyl acrylate.

In such a case, the acrylic rubber may contain structural units derived from n-butyl acrylate in an amount in the range of 50 mass % or less with respect to the entire structural units derived from the (meth)acrylic acid alkyl ester.

### <Explanation of Term>

The term "A to B," as used herein, means A or more and B or less.

### Advantageous Effects of Invention

It is possible according to the present invention to improve the heat resistance and elongate the service time of a bladder for tire vulcanization.

### Description of Embodiments

Hereinafter, favorable embodiments of the present invention will be described in detail. However, it should be understood that the present invention is not restricted by the embodiments described below.

The bladder for tire vulcanization of the present embodiment is a bladder prepared from an acrylic rubber composition at least comprising 100 parts by mass of an acrylic rubber containing 94.5 to 99.5 mass % of structural units derived from (meth)acrylic acid alkyl ester and 0.5 to 5 mass % of structural units derived from (meth)acrylic acid alkyl ether, 30 to 200 parts by mass of a carbon black having an arithmetical mean particle diameter, as determined according to JIS Z8901, of 20 to 30 nm and a DBP oil absorption of 70 to 130 ml/100 g, and 0.1 to 5 parts by mass of an imidazole compound as crosslinking agent.

### (Acrylic rubber)

Acrylic rubbers are rubbers obtained by copolymerizing an unsaturated monomer such as a (meth)acrylic acid alkyl ester with other monomers copolymerizable therewith. In particular, an acrylic rubber obtained by copolymerization of a (meth)acrylic acid alkyl ester and a (meth)acrylic acid alkyl ether is used for the bladder of the present embodiment. The acrylic rubber is preferably a copolymer of a (meth)acrylic acid alkyl ester, a (meth)acrylic acid alkyl ether, and additionally ethylene.

### [(Meth)acrylic acid alkyl ester]

A (meth)acrylic acid alkyl ester is a monomer forming the basic skeleton of acrylic rubbers. It is possible to adjust the basic properties, such as physical properties under ambient atmosphere, heat resistance, low-temperature resistance, and oil resistance, of the acrylic rubber composition and also of the bladder for tire vulcanization prepared therefrom, by properly selecting the kind of the (meth)acrylic acid alkyl ester.

Examples of the kinds of the (meth)acrylic acid alkyl esters constituting the acrylic rubbers include, but are not limited to, methyl acrylate, ethyl acrylate, n-propyl acrylate, n-butyl acrylate, isobutyl (meth)acrylate, n-pentyl (meth)acrylate, n-hexyl (meth)acrylate, n-octyl (meth)acrylate, n-decyl (meth)acrylate, 2-ethylhexyl acrylate, and the like.

In particular among the (meth)acrylic acid alkyl esters above, methyl acrylate and ethyl acrylate are preferable. Such an acrylic rubber shows further improved oil resistance, when it has structural units derived from methyl or ethyl acrylate among in an amount of 50 to 100 mass % of the structural units derived from (meth)acrylic acid alkyl esters.

Alternatively, methyl or ethyl acrylate and n-butyl acrylate may be used in combination. The acrylic rubber shows further favorable low-temperature resistance, when it contains the structural units derived from n-butyl acrylate in an amount in the range of 50 mass % or less with respect to the total mass of the structural units derived from (meth)acrylic acid alkyl ester.

However when the amount of the structural units derived from (meth)acrylic acid alkyl ester is less than 94.5 mass % with respect to the total mass of the acrylic rubber, the acrylic rubber gives a bladder for tire vulcanization with deteriorated high-temperature physical properties. Alternatively when the amount of the structural units derived from (meth)acrylic acid alkyl ester is more than 99.5 mass % with respect to the total mass of the acrylic rubber, the acrylic rubber obtained becomes less vulcanizable.

Accordingly, an acrylic rubber containing the structural units derived from (meth)acrylic acid alkyl ester in an amount of 94.5 to 99.5 mass % is used for preparation of the bladder of the present embodiment. The acrylic rubber used for the bladder of the present embodiment is preferably an acrylic rubber containing the structural units derived from (meth)acrylic acid alkyl ester in an amount of 97 to 99.5 mass % with respect to the total mass of the acrylic rubber from the viewpoints of high-temperature physical properties and crosslinkability.

### [(Meth)acrylic acid alkyl ether]

The (meth)acrylic acid alkyl ether is a crosslinkable monomer forming crosslink points for intermolecular crosslinking between acrylic and (meth)acrylic acid alkyl esters when the acrylic rubber composition is crosslinked. The (meth)acrylic acid alkyl ether is preferably glycidyl methacrylate, glycidyl acrylate, allyl glycidyl ether, or methallyl glycidyl ether, but these compounds may be use alone or in combination of two or more.

However when the content of the structural units derived from (meth)acrylic acid alkyl ether is more than 5 mass % with respect to the total mass of the acrylic rubber, the bladder for tire vulcanization obtained shows deterioration in elongation, tear strength, and also bending fatigue resistance in high-temperature test. Alternatively when the content of the structural units derived from (meth)acrylic acid alkyl ether is less than 0.5 mass % with respect to the total mass of the acrylic rubber, the acrylic rubber composition obtained becomes less crosslinkable. Therefore, an acrylic rubber containing the structural units derived from (meth)acrylic acid alkyl ether in an amount of 0.5 to 5 mass % is used in the bladder of the present embodiment.

### [Ethylene]

When ethylene is copolymerized, the bladder for tire vulcanization obtained from the acrylic rubber shows improved low-temperature resistance. In particular when the acrylic rubber contains ethylene-derived structural units in an amount in the range of 2.5 mass % or less, it is possible to improve the low-temperature resistance and also the elongation under high-temperature atmosphere of the bladder for tire vulcanization.

### [Other monomers]

In the acrylic rubber used in the bladder of the present embodiment, monomers other than the (meth)acrylic acid alkyl ether and ethylene may be copolymerized with the (meth)acrylic acid alkyl ester, in the range that does not impair the favorable properties of the bladder for tire vulcanization.

Examples of the monomers copolymerizable with (meth)acrylic acid alkyl ester include alkyl vinyl ketones such as methyl vinyl ketone; vinyl ethers such as vinyl ethyl ether; allyl ethers such as allyl methyl ether; vinyl aromatic compounds such as styrene, α-methylstyrene, chlorostyrene, vinyltoluene, and vinylnaphthalene; vinyl nitriles such as acrylonitrile and methacrylonitrile; ethylenic unsaturated compounds such as acrylamide, vinyl acetate, propylene, butadiene, isoprene, pentadiene, vinyl chloride, vinylidene chloride, vinyl fluoride, vinylidene fluoride, vinyl propionate, and alkyl fumarate; and the like.

Typical examples of monomers copolymerizable with the (meth)acrylic acid alkyl ester include n-decyl (meth)acrylate, n-dodecyl (meth)acrylate, n-octadecyl acrylate, cyanomethyl (meth)acrylate, 1-cyanoethyl (meth)acrylate, 2-cyanoethyl (meth)acrylate, 1-cyanopropyl (meth)acrylate, 2-cyanopropyl (meth)acrylate, 3-cyanopropyl (meth)acrylate, 4-cyanobutyl (meth)acrylate, 6-cyanohexyl (meth)acrylate, or 2-ethyl-6-cyanohexyl (meth)acrylate, 8-cyanooctyl (meth)acrylate, and the like.

In addition, the (meth)acrylic acid alkyl ester may be copolymerized with, for example, an acrylic acid alkoxyalkyl ester such as 2-methoxyethyl acrylate, 2-ethoxyethyl acrylate, 2-(n-propoxy)ethyl acrylate, 2-(n-butoxy)ethyl acrylate, 3-methoxypropyl acrylate, or 2-(n-butoxy)propyl acrylate.

Further, the (meth)acrylic acid alkyl ester may be copolymerized with a fluorine-containing (meth)acrylic acid ester such as 1,1-dihydroperfluoroethyl (meth)acrylate, 1,1-dihydroperfluoropropyl (meth)acrylate, 1,1,5-trihydroperfluorohexyl (meth)acrylate, 1,1,2,2-tetrahydroperfluoropropyl (meth)acrylate, 1,1,7-trihydroperfluoroheptyl (meth)acrylate, 1,1-dihydroperfluorooctyl (meth)acrylate, or 1,1-dihydroperfluorodecyl (meth)acrylate; a hydroxyl group-containing (meth)acrylic acid ester such as 1-hydroxypropyl (meth)acrylate, 2-hydroxypropyl (meth)acrylate, or hydroxyethyl (meth)acrylate; a tertiary amino-group-containing (meth)acrylic acid ester such as diethylaminoethyl (meth)acrylate, dibutylaminoethyl (meth)acrylate, or the like.

The method for producing the acrylic rubber is not particularly limited and it can be produced by copolymerization of the monomers described above by a known method such as emulsion polymerization, suspension polymerization, solution polymerization, or bulk polymerization.

The structural units derived from (meth)acrylic acid alkyl ester, those derived from (meth)acrylic acid alkyl ether, those derived from ethylene, and other structural units can be determined by nuclear magnetic resonance spectroscopy.

### (Carbon black)

The carbon black blended to the bladder of the present embodiment has an arithmetical mean particle diameter (hereinafter, referred to simply as "particle diameter"), as determined by the "Test powders and test particles" of JIS Z8901, of 20 to 30 nm and a DBP oil absorption of 70 to 130 ml/100 g.

When a carbon black having a particle diameter of less than 20 nm is used, the acrylic rubber composition becomes less easily processable. Alternatively when a carbon black having a particle diameter of more than 30 nm is used, the tear strength, elongation, and bending fatigue resistance under high-temperature atmosphere become deteriorated. The carbon black preferably has a particle diameter of 22 to 28 nm from the viewpoint of bending fatigue resistance under high-temperature atmosphere.

When the carbon black has a DBP oil absorption of less than 70 ml/100 g, the bladder for tire vulcanization therefrom shows smaller elongation during high-temperature tensile test. Alternatively when a carbon black having a DBP oil absorption of more than 130 ml/100 g is used, the resulting bladder shows lowered bending fatigue resistance under high-temperature atmosphere.

However when the amount of the carbon black blended is less than 30 parts by mass with respect to 100 parts by mass of the acrylic rubber, it shows insufficient reinforcing effect. Alternatively when the amount of the carbon black blended is more than 200 parts by mass with respect to 100 parts by mass of the acrylic rubber, the bladder for tire vulcanization obtained therefrom shows lowered elongation in high-temperature tensile test. Accordingly, the amount of the carbon black blended to the bladder of the present embodiment is 30 to 200 parts by mass with respect to 100 parts by mass of the acrylic rubber.

### (Crosslinking agent)

The acrylic rubber composition for preparation of the bladder of the present embodiment contains an imidazole compound blended as crosslinking agent in an amount of 0.1 to 5 parts by mass with respect to 100 parts by mass of the acrylic rubber. When the amount of the imidazole compound blended is less than 0.1 part by mass with respect to 100 parts by mass of the acrylic rubber, the acrylic rubber composition therefrom becomes hardly crosslinkable. Alternatively when the amount of the imidazole compound blended is more than 5 parts by mass with respect to 100 parts by mass of the acrylic rubber, the bladder for tire vulcanization therefrom shows smaller elongation and tensile strength in high-temperature tensile test.

The amount of the imidazole compound blended is preferably 0.1 to 3 parts by mass with respect to 100 parts by mass of the acrylic rubber and it is thus possible to obtain a crosslinked product (bladder) superior in the balance of physical properties.

Examples of the imidazole compounds blended as crosslinking agents include, but are not particularly limited to, 2-(4-fluorophenyl)-1-methylbenzimidazole, 1-methyl-2-phenylimidazole, butylcarbamoyl-2-benzimidazole, 1-decylimidazole, 1,5-dicyclohexylimidazole, 1-(2,4,6-triisopropylbenzenesulfonyl)-imidazole, 2,2-dithiobis(4-t-butyl-1-isopropylimidazole), 1-cyanoethyl-2-methylimidazole, 1-cyanoethyl-2-phenylimidazole, 1-cyanoethyl-2-ethyl-4-methylimidazole, 1-cyanoethyl-2-undecylimidazole, 1-cyanoethyl-2-methylimidazole trimellitate, 1-cyanoethyl-2-phenylimidazole trimellitate, 1-cyanoethyl-2-ethyl-4-methylimidazole trimellitate, 1-cyanoethyl-2-undecylimidazole trimellitate, 5-chloro-1-methylimidazole, 2-mercapto-1-methylimidazole, 1-trifluoroacetylimidazole, 4-methyl-2-phenylimidazole, 2-benzimidazolepropionic acid, 2-imidazolecarboxylic acid, 2-allylthiobenzimidazole, 2,5,6-trimethylbenzimidazole, 4,5-dimethyl-2-phenylimidazole, 2-methylimidazole, 2-ethylimidazole, 2-hydroxybenzimidazole, 2-mercaptobenzimidazole, 2-(4-thiazoyl) benzimidazole, 2-phenylimidazole, 2-(2-pyridyl)benzimidazole, 2-undecylimidazole, 4,5-diphenyl-2-imidazolethiol, 4,5-dimethyl-2-phenylimidazole, 1-(4-chlorobenzyl)-2-(1-pyrrolidinyl-methyl)benzimidazole, 2,4,5-triphenylimidazole, 1,1-carbonyldiimidazole, 1,1-thiocarbonyldiimidazole, 2-nitroimidazole, 2-mercaptoimidazole, 1,2-dimethylimidazole, 2,4,5-tribromoimidazole, 2-imidazolecarboxyaldehyde, 2-methyl-5-nitroimidazole, 4-hydroxymethylimidazole, 4,5-dicyanoimidazole, benzimidazole, 4,5-diphenylimidazole, 4,5-dichloroimidazole, 4-nitroimidazole, 5-amino-4-nitroimidazole, 4-imidazolecarboxylic acid, and 5-imidazolethiocarboxylic acid.

Among the imidazole compounds described above, 1,2-dimethylimidazole is particularly preferable for the bladder of the present embodiment. These imidazole compounds may be used alone or in combination of two or more and a crosslinking accelerator may be used additionally. In such a case, the crosslinking accelerator used is preferably an ammonium salt compound or a halogen salt compound.

### (Antioxidant agent)

The acrylic rubber composition for preparation of the bladder of the present embodiment may contain an antioxidant agent in addition to the components described above. The antioxidant agent for use is generally an amine-based compound, a metal carbamate salt, a phenol- or phosphorus-based compound, or the like. An amine-based antioxidant agent, a phosphorus-based antioxidant agent, or combination thereof is preferably used for the bladder of the present embodiment for improvement of the tear strength in high-temperature tensile test and the antioxidant agent is preferably blended in an amount in the range of 0.1 to 10 parts by mass with respect to 100 parts by mass of the acrylic rubber.

Examples of the amine- and phosphorus-based antioxidant agents include, but are not limited to, 4,4'-α,α-dimethylbenzyl diphenylamine, tris(nonylphenyl)phosphite, triisodecyl phosphite, dilauryl thiodipropionate, N-isopropyl-N-phenyl-p-phenylenediamine, N-1,3-dimethylbutyl-N-phenyl-p-phenylenediamine, N-phenyl-1-naphthylamine, octyl diphenylamine, N,N-di-2-naphtyl-p-phenylenediamine, p-toluenesulfonylamidodiphenylamine, nickel diethyl dithiocarbamate, nickel dibutyl dithiocarbamate, and the like.

In particular among various amine- and phosphorus-based antioxidant agents, 4,4'-α,α-dimethylbenzyldiphenylamine, tris(nonylphenyl) phosphite, triisodecyl phosphite, or dilauryl thiodipropionate is preferably used for the bladder of the present embodiment. The amine- and phosphorus-based antioxidant agents described above may be used alone or in combination of two or more.

### (Other components)

The acrylic rubber composition for preparation of the bladder of the present embodiment may contain, in addition to the carbon black described above, two or more additives such as reinforcing agents (such as surface-finished calcium carbonate) and fillers suitable for the rubber physical properties. In such a case, the total amount thereof blended is preferably 30 to 200 parts by mass with respect to 100 parts by mass of the acrylic rubber.

The acrylic rubber composition for preparation of the bladder of the present embodiment may contain a plasticizer that is normally used in rubber application, as it is blended. Examples of the plasticizers blended to the acrylic rubber composition include, but are not limited to, ester-based plasticizers, ether-based plasticizers such as polyoxyethylene ether, ether-ester-based plasticizer, and the like, and thus, various plasticizers are usable. The amount of the plasticizer blended then is preferably 50 parts or less by mass with respect to 100 parts by mass of the acrylic rubber.

The rubber component in the acrylic rubber composition for preparation of the bladder of the present embodiment is mainly an acrylic rubber, but may contain, as needed, a rubber other than the acrylic rubber. Examples of the other rubber components blended to the acrylic rubber composition are various synthetic rubbers including natural rubbers (NR), butyl rubbers (IIR), butadiene rubbers (BR), acrylonitrile rubbers (NBR), chloroprene rubbers (CR), ethylene propylene rubbers (EPDM), fluorine rubbers (FKM), silicone rubbers (Q), chlorosulfonated polyethylene rubbers (CSM), epichlorohydrin rubbers (CO-ECO), chlorinated polyethylene rubbers (CM), and the like.

### (Bladder for tire vulcanization)

The bladder for tire vulcanization of the present embodiment is prepared by molding and crosslinking an acrylic rubber composition in the composition described above into a predetermined shape. Machines for kneading, molding, and crosslinking used in the production process are not particularly limited and those commonly used in the rubber industry may be used.

The bladder of the present embodiment, of which the structural unit of the major component acrylic rubber is specified and the kinds and amounts of the carbon black and the crosslinking agent blended are specified, is superior in processing stability and heat resistance and also in elongation at break, tear strength, and bending fatigue resistance under high-temperature atmosphere. As a result, it is possible to obtain a bladder for tire vulcanization improved in heat resistance and having a service time longer than before.

### Examples

Hereinafter, the advantageous effects of the present invention will be described specifically with reference to Examples and Comparative Examples of the present invention. In the Examples below, crosslinked sheets were prepared from acrylic rubber compositions different in component composition and the properties thereof were evaluated.

### (Example 1)

### <Preparation of acrylic rubber>

0.06 kg of glycidyl methacrylate, 16 kg of aqueous 4 mass % solution of partially saponified vinyl alcohol, and 23 g of sodium acetate were placed in a pressure-resistant reactor and then mixed vigorously therein to give a homogeneous suspension. After air in the top tank was replaced with nitrogen, ethylene was introduced into the top tank to a pressure of 35 kg/cm².

After stirring was continued and the mixture in the tank was kept at 55°C, 2.2 kg of methyl acrylate and 8.5 kg of ethyl acrylate were added thereto through separate injection ports and an aqueous t-butyl hydroperoxide solution was added under pressure, to initiate polymerization. The internal tank temperature was kept at 55°C during reaction and the reaction ended in 9 hours. An aqueous sodium borate solution was added to the polymer solution obtained to solidify the polymer and the resulting polymer was dehydrated and dried, to give acrylic rubber A.

Structural units derived from respective monomers in the acrylic rubber A were quantitatively analyzed by nuclear magnetic resonance spectroscopy. As a result, the acrylic rubber A had a copolymer composition consisting of 20 parts by mass of structural units derived from methyl acrylate, 77.5 parts by mass of structural units derived from ethyl acrylate, 2 parts by mass of structural units derived from ethylene, and 0.5 parts by mass of structural units derived from glycidyl methacrylate.

Subsequently, 2.7 g (1 part by mass) of stearic acid, 5.4 g (2 parts by mass) of antioxidant agent A, 2.7 g (1 part by mass) of antioxidant agent B, 2.7 g (1 part by mass) of antioxidant agent C, 135 g (50 parts by mass) of carbon black a, 8.1 g (3 parts by mass) of plasticizer A, 0.8 g (0.3 parts by mass) of stearylamine were added to 270 g (100 parts by mass) of acrylic rubber A and the mixture was kneaded in a high-pressure test kneading machine. Additionally, 5.4 g (2 parts by mass) of crosslinking agent X, 2.7 g (1 part by mass) of crosslinking agent Y, and 2.7 g (1 part by mass) of crosslinking agent Z were added to the composition obtained and the mixture was kneaded with an 8-inch open roll, to give acrylic rubber composition.

The acrylic rubber composition was heat-treated with an electrical heat press under a temperature condition of 170°C for 20 minutes, to give a crosslinked sheet. The crosslinked sheet was subjected to the tests shown below.

### <High-temperature physical properties>

First, the crosslinked sheet was left under a temperature condition of 160°C for 504 hours. The elongation and the tear strength of the crosslinked sheet after the heat-aging test were determined under a high-temperature atmosphere at 160°C. The conditions (temperature and period) of the heat-aging test then were determined according to JIS K6257. The elongation at break under high-temperature atmosphere was determined according to JIS K6251 and the temperature of the test machine was determined according to JIS K6250, 12.2.

As a result, an elongation of more than 200% was considered "favorable", while an elongation of less than 200% "unfavorable". Alternatively, a tear strength of more than 15 N/mm was considered "favorable", while a tear strength of less than 15 N/mm "unfavorable."

In addition, the elongation and the tear strength of a crosslinked sheet (secondary crosslinked product) before heat-aging test were determined at normal temperature (in temperature-controlled room at 23°C) by the same methods for comparison.

### <Bending fatigue resistance (crack growth)>

The flex cracking resistance was determined according to JIS K6260 in a crack growth test (growth from 2.0 mm to 12 mm) using a de Mattia test piece under an atmosphere at 100°C. As a result, a test piece showing an endurable number of cycles of more than 1.0×10⁴ was considered "favorable", while that showing an endurable number of less than 1.0×10⁴ "unfavorable."

### (Example 2)

0.33 kg of glycidyl acrylate, 16 kg of aqueous 4 mass % solution of partially saponified vinyl alcohol, and 23 g of sodium acetate were placed in a pressure-resistant reactor and the mixture was stirred thoroughly, to give a homogeneous suspension. After air in the top tank was replaced with nitrogen, ethylene was introduced into the top tank to a pressure of 35 kg/cm².

After stirring was continued and the mixture in the tank was kept at 55°C, 6.6 kg of ethyl acrylate and 3.85 kg of butyl acrylate were added thereto from separate injection ports and an aqueous t-butyl hydroperoxide solution was added under pressure, to initiate polymerization. The internal tank temperature was kept at 55°C during reaction and the reaction ended in 9 hours. An aqueous sodium borate solution was added to the polymer solution obtained to solidify the polymer, and the resulting polymer was dehydrated and dried, to give acrylic rubber B.

The acrylic rubber B obtained had a copolymer composition consisting of 2 parts by mass of structural units derived from ethylene, 60 parts by mass of structural unit derived from ethyl acrylate, 35 parts by mass of structural units derived from butyl acrylate, and 3 parts by mass of structural units derived from glycidyl acrylate. An acrylic rubber composition and a crosslinked sheet were prepared by methods similar to those described in Example 1 from the acrylic rubber B thus obtained and subjected to tests similar to those in Example 1.

### (Example 3)

0.11 kg of allyl glycidyl ether, 1.1 kg of vinyl acetate, 16 kg of aqueous 4 mass % solution of partially saponified vinyl alcohol, and 23 g of sodium acetate were placed in a pressure-resistant reactor and the mixture was stirred thoroughly to give a homogeneous suspension. Air in the top tank was replaced with nitrogen and the pressure was adjusted to 30 kg/cm².

After stirring was continued and the mixture in the tank was kept at 55°C, 4.9 kg of ethyl acrylate and 4.0 kg of butyl acrylate were added thereto through separate injection ports and an aqueous t-butyl hydroperoxide solution was added under pressure, to initiate polymerization. The internal tank temperature was kept at 55°C during reaction and the reaction ended in 9 hours. An aqueous sodium borate solution was added to the polymer solution obtained to solidify the polymer and the resulting polymer was dehydrated and dried, to give acrylic rubber C.

The acrylic rubber C obtained had a copolymer composition consisting of 49 parts by mass of structural units derived from ethyl acrylate, 40 parts by mass of structural units derived from butyl acrylate, 10 parts by mass of structural units derived from vinyl acetate, and 1 part by mass of structural units derived from allyl glycidyl ether. An acrylic rubber composition and a crosslinked sheet were prepared by methods similar to those in Example 1 from the acrylic rubber C thus obtained and subjected to tests similar to those in Example 1.

### (Example 4)

0.55 kg of glycidyl methacrylate, 3.3 kg of vinyl acetate, 16 kg of aqueous 4 mass % solution of partially saponified vinyl alcohol, and 23 g of sodium acetate were placed in a pressure-resistant reactor and the mixture was stirred thoroughly to give a homogeneous suspension. After air in the top tank was replaced with nitrogen, ethylene was introduced into the top tank to a pressure of 45 kg/cm².

After stirring was continued and the mixture in the tank was kept at 55°C, 5.25 kg of ethyl acrylate and 1.1 kg of butyl acrylate were added thereto through separate injection ports and an aqueous t-butyl hydroperoxide solution was added under pressure, to initiate polymerization. The internal tank temperature was kept at 55°C during reaction and the reaction ended in 9 hours. An aqueous sodium borate solution was added to the polymer solution obtained to solidify the polymer and the resulting polymer was dehydrated and dried, to give acrylic rubber D.

The acrylic rubber D obtained had a copolymer composition consisting of 52.5 parts by mass of structural units derived from ethyl acrylate, 10 parts by mass of structural units derived from butyl acrylate, 30 parts by mass of structural units derived from vinyl acetate, 2.5 parts by mass of structural units derived from ethylene, and 5 parts by mass of structural units derived from glycidyl methacrylate. An acrylic rubber composition and a crosslinked sheet were prepared by methods similar to those in Example 1 from the acrylic rubber D thus obtained and subjected to tests similar to those in Example 1.

### (Example 5)

Acrylic rubber E was prepared in a manner similar to Example 2, except that 8.8 kg of ethyl acrylate and 2.2 kg of butyl acrylate were added, replacing 6.6 kg of ethyl acrylate and 3.85 kg of butyl acrylate.

The acrylic rubber E obtained had a copolymer composition consisting of 2 parts by mass of structural units derived from ethylene, 76.7 parts by mass of structural units derived from ethyl acrylate, 19.7 parts by mass of structural units derived from butyl acrylate, and 1.6 parts by mass of structural units derived from monobutyl maleate. An acrylic rubber composition and a crosslinked sheet were prepared by methods similar to those in Example 1 from the acrylic rubber E thus obtained and subjected to tests similar to those in Example 1.

### (Example 6)

0.55 kg of methallyl glycidyl ether, 3.3 kg of vinyl acetate, 16 kg of aqueous 4 mass % solution of partially saponified vinyl alcohol, and 23 g of sodium acetate were placed in a pressure-resistant reactor and the mixture was stirred thoroughly to give a homogeneous suspension. Air in the top tank was replaced with nitrogen and the pressure was adjusted to 30 kg/cm².

After stirring was continued and the mixture in the tank was kept at 55°C, 8.8 kg of ethyl acrylate and 2.04 kg of butyl acrylate were added thereto through separate injection ports and an aqueous t-butyl hydroperoxide solution was added under pressure, to initiate polymerization. The internal tank temperature was kept at 55°C during reaction and the reaction ended in 9 hours. An aqueous sodium borate solution was added to the polymer solution obtained to solidify the polymer and the resulting polymer was dehydrated and dried, to give acrylic rubber F.

The acrylic rubber F obtained had a copolymer composition consisting of 80 parts by mass of structural units derived from ethyl acrylate, 18.5 parts by mass of structural units derived from butyl acrylate, 30 parts by mass of structural units derived from vinyl acetate, and 5 parts by mass of structural units derived from glycidyl methacrylate. An acrylic rubber composition and a crosslinked sheet were prepared by methods similar to those in Example 1 from the acrylic rubber F thus obtained and subjected to tests similar to those in Example 1.

### (Example 7)

An acrylic rubber composition was prepared in a manner similar to Example 1, except that 121.5 g (45 parts by mass) of carbon black b was added, replacing 135 g (50 parts by mass) of carbon black a, to the acrylic rubber obtained by a method similar to Example 2. A crosslinked sheet was prepared in a manner similar to Example 1 using the obtained acrylic rubber composition and subjected to tests similar to those in Example 1.

### (Example 8)

An acrylic rubber composition was prepared in a manner similar to Example 2, except that 148.5 g (55 parts by mass) of carbon black c was added, replacing 135 g (50 parts by mass) of carbon black a, to the acrylic rubber B obtained by a method similar to Example 2. A crosslinked sheet was prepared in a manner similar to Example 1 using the obtained acrylic rubber composition and subjected to tests similar to those in Example 1.

### (Example 9)

An acrylic rubber composition was prepared in a manner similar to Example 2, except that 148.5 g (55 parts by mass) of carbon black d was added, replacing 135 g (50 parts by mass) of carbon black a, to the acrylic rubber B obtained by a method similar to Example 2. A crosslinked sheet was prepared in a manner similar to Example 1 using the obtained acrylic rubber composition and subjected to tests similar to those in Example 1.

### (Example 10)

An acrylic rubber composition was prepared in a manner similar to Example 2, except that 162 g (60 parts by mass) of carbon black e was added, replacing 135 g (50 parts by mass) of carbon black a, to the acrylic rubber B obtained by a method similar to Example 2. A crosslinked sheet was prepared in a manner similar to Example 1 using the obtained acrylic rubber composition and subjected to tests similar to those in Example 1.

### (Example 11)

An acrylic rubber composition was prepared in a manner similar to Example 2, except that 162 g (60 parts by mass) of carbon black f was added, replacing 135 g (50 parts by mass) of carbon black a, to the acrylic rubber B obtained by a method similar to Example 2. A crosslinked sheet was prepared in a manner similar to Example 1 using the obtained acrylic rubber composition and subjected to tests similar to those in Example 1.

### (Example 12)

An acrylic rubber composition was prepared in a manner similar to Example 2, except that 162 g (60 parts by mass) of carbon black g was added, replacing 135 g (50 parts by mass) of carbon black a, to the acrylic rubber B obtained by a method similar to Example 2. A crosslinked sheet was prepared in a manner similar to Example 1 using the obtained acrylic rubber composition and subjected to tests similar to those in Example 1.

### (Example 13)

An acrylic rubber composition was prepared in a manner similar to Example 2, except that 148.5 g (55 parts by mass) of carbon black h was added, replacing 135 g (50 parts by mass) of carbon black a, to the acrylic rubber B obtained by a method similar to Example 2. A crosslinked sheet was prepared in a manner similar to Example 1 using the obtained acrylic rubber composition and subjected to tests similar to those in Example 1.

### (Example 14)

An acrylic rubber composition was prepared in a manner similar to Example 2 using the acrylic rubber B obtained by a method similar to Example 2, except that antioxidant agent c was added in an amount of 0.27 g (0.1 parts by mass) and crosslinking agent X in an amount of 0.54 g (0.2 parts by mass). A crosslinked sheet was prepared in a manner similar to Example 1 using the obtained acrylic rubber composition and subjected to tests similar to those in Example 1.

### (Example 15)

An acrylic rubber composition was prepared in a manner similar to Example 2 using the acrylic rubber B obtained by a method similar to Example 2, except that antioxidant agent c was added in an amount of 0.27 g (0.1 parts by mass) and crosslinking agent X in an amount of 13.2 g (4.9 parts by mass). A crosslinked sheet was prepared in a manner similar to Example 1 using the obtained acrylic rubber composition and subjected to tests similar to those in Example 1.

### (Comparative Example 1)

An acrylic rubber composition was prepared in a manner similar to Example 2 using the acrylic rubber B obtained by a method similar to Example 2, except that 270 g (100 parts by mass) of carbon black i was added, replacing 162 g (60 parts by mass) of carbon black a. A crosslinked sheet was prepared in a manner similar to Example 1 using the obtained acrylic rubber composition and subjected to tests similar to those in Example 1.

### (Comparative Example 2)

An acrylic rubber composition was prepared in a manner similar to Example 2 using the acrylic rubber B obtained by a method similar to Example 2, except that 135 g (50 parts by mass) of carbon black j was added, replacing 162 g (60 parts by mass) of carbon black a. A crosslinked sheet was prepared in a manner similar to Example 1 using the obtained acrylic rubber composition and subjected to tests similar to those in Example 1.

### (Comparative Example 3)

Acrylic rubber G was prepared in a manner similar to Example 2, except that 0.88 kg of glycidyl methacrylate, 6.05 kg of ethyl acrylate, and 3.85 kg of butyl acrylate were added, replacing 0.06 kg of glycidyl methacrylate, 2.2 kg of methyl acrylate, and 8.75 kg of ethyl acrylate.

The acrylic rubber G obtained had a copolymer composition consisting of 2 parts by mass of structural units derived from ethylene, 55 parts by mass of structural units derived from ethyl acrylate, 35 parts by mass of structural units derived from butyl acrylate, and 3 parts by mass of structural units derived from glycidyl methacrylate. An acrylic rubber composition and a crosslinked sheet were prepared by methods similar to those in Example 1 from acrylic rubber G thus obtained and subjected to tests similar to those in Example 1.

### (Comparative Example 4)

An acrylic rubber composition was prepared in a manner similar to Example 2 using the acrylic rubber B obtained by a method similar to Example 2, except that antioxidant agent c and crosslinking agent X were not added. A crosslinked sheet was prepared in a manner similar to Example 1 using the obtained acrylic rubber composition and subjected to tests similar to those in Example 1.

### (Comparative Example 5)

An acrylic rubber composition was prepared in a manner similar to Example 2 using the acrylic rubber B obtained by a method similar to Example 2, except that 16.2 g (6 parts by mass) of antioxidant agent a and 13.5 g (5 parts by mass) of antioxidant agent b were added, replacing 5.4 g (2 parts by mass) of antioxidant agent a and 2.7 g (1 part by mass) of antioxidant agent b. A crosslinked sheet was prepared in a manner similar to Example 1 using the obtained acrylic rubber composition and subjected to tests similar to those in Example 1.

### (Comparative Example 6)

An acrylic rubber composition was prepared in a manner similar to Example 2 using the acrylic rubber B obtained by a method similar to Example 2, except that crosslinking agent X was added in an amount of 14.85 g (5.5 parts by mass). A crosslinked sheet was prepared in a manner similar to Example 1 using the obtained acrylic rubber composition and subjected to tests similar to those in Example 1.

The results above are summarized in the following Tables 1 and 2.

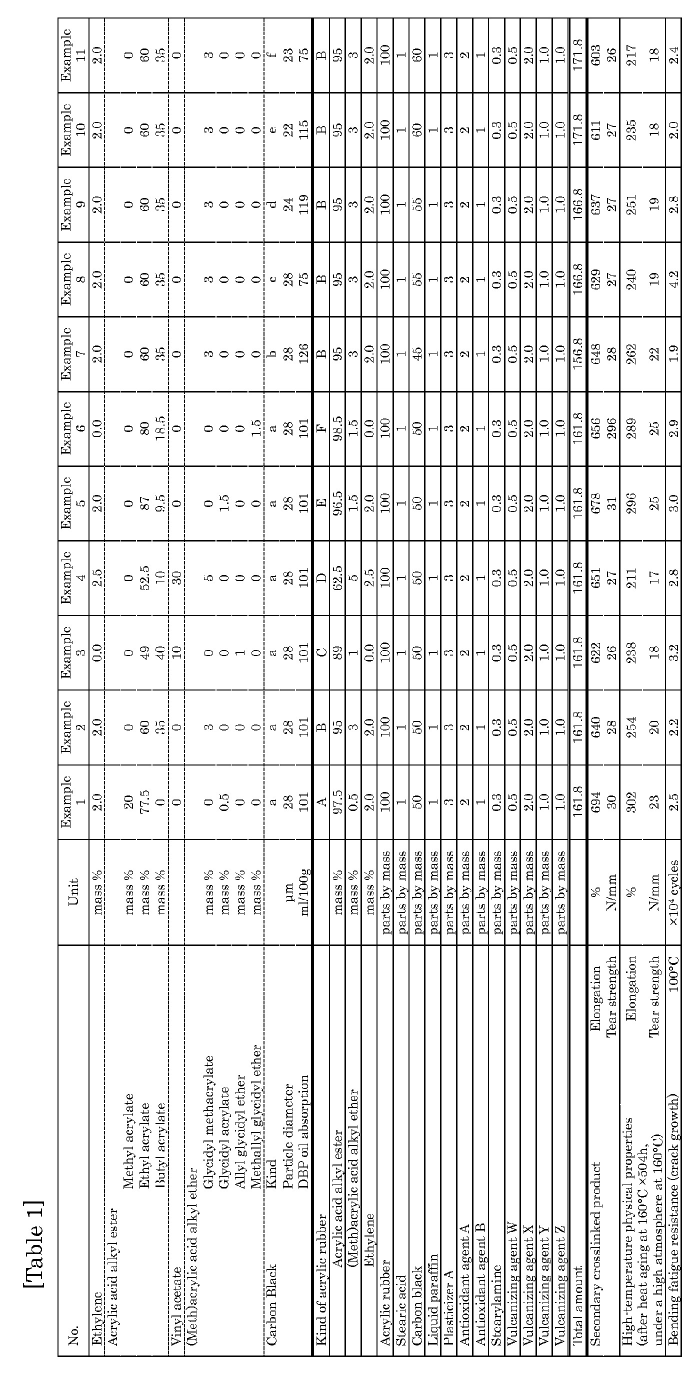

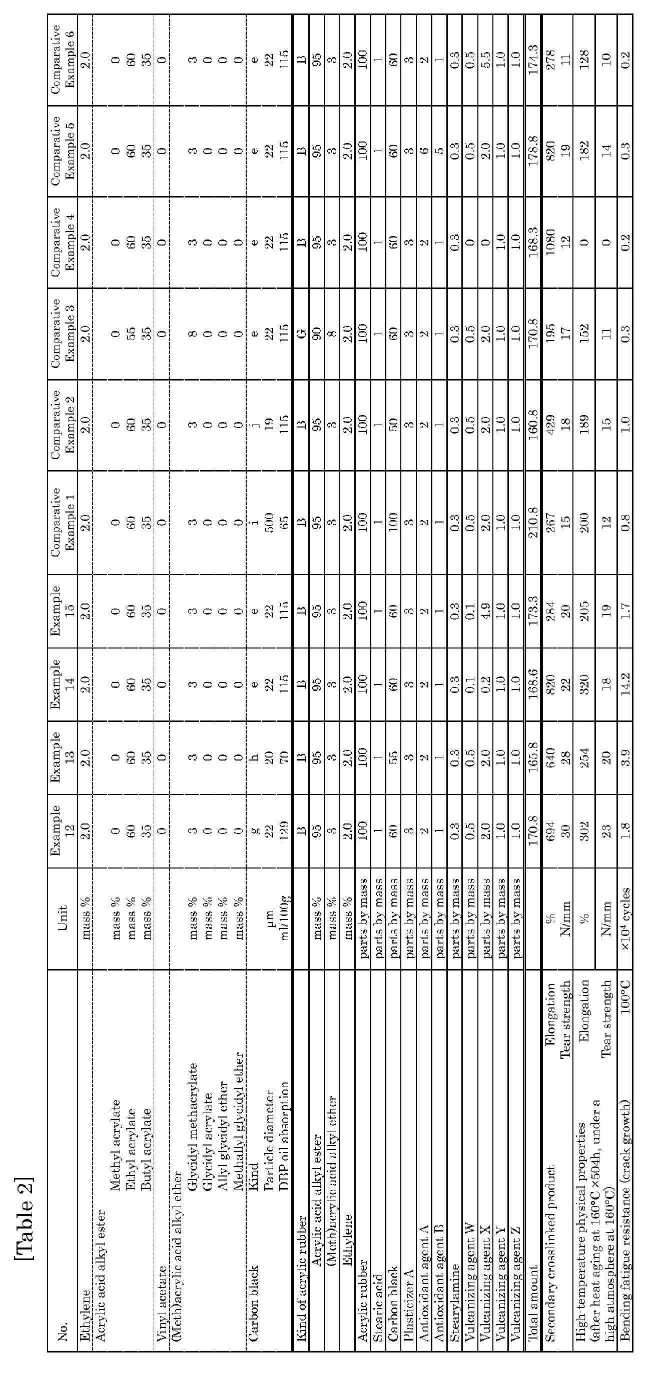

In Tables 1 and 2 above, the antioxidant agent A is 4,4'-α,α-dimethylbenzyldlphenylamine; the antioxidant agent B is tris(nonylphenyl) phosphite; the crosslinking agent W is 2-mercaptobenzimidazole; the crosslinking agent X is 1,2 dimethylimidazole; the crosslinking agent Y is diphenylurea; and the crosslinking agent Z is isocyanuric acid.

The particle diameter and the DBP oil absorption of carbon blacks a to j are as follows. The particle diameter shown below is an arithmetical mean particle diameter, as determined according to JIS Z8901, while the DBP oil absorption is a value determined according to JIS K6217. Carbon black a: particle diameter: 28 nm, DBP oil absorption: 101 ml/100 g Carbon black b: particle diameter: 28 nm, DBP oil absorption: 126 ml/100 g Carbon black c: particle diameter: 28 nm, DBP oil absorption 75 ml/100 g Carbon black d: particle diameter: 24 nm, DBP oil absorption: 119 ml/100 g Carbon black e: particle diameter: 22 nm, DBP oil absorption: 115 ml/100 g Carbon black f: particle diameter: 23 nm, DBP oil absorption 75 ml/100 g Carbon black g: particle diameter: 22 nm, DBP oil absorption: 129 ml/100 g Carbon black h: particle diameter: 20 nm, DBP oil absorption 70 ml/100 g, Carbon black i: particle diameter 500 nm, DBP oil absorption 65 ml/100 g Carbon black j: particle diameter 19 nm, DBP oil absorption: 115 ml/100 g

Materials used other than those above are products available on the market.

As shown in Tables 1 and 2, crosslinked sheets obtained from the acrylic rubber compositions of Examples 1 to 15, which were prepared within the technical scope of the present invention, were larger in elongation at break and tear strength under high-temperature atmosphere and superior in bending fatigue resistance, as compared to the crosslinked sheets obtained from the acrylic rubber compositions of Comparative Examples 1 to 6, which were prepared outside the technical scope of the present invention.

The results above demonstrate that it is possible according to the present invention to produce a bladder for tire vulcanization having a service time longer than that of traditional products, as its crosslinked product shows improved heat resistance.

## Claims

1. A bladder for tire vulcanization prepared from an acrylic rubber composition at least comprising,
100 parts by mass of an acrylic rubber containing structural units derived from (meth)acrylic acid alkyl ester in an amount of 94.5 to 99.5 mass % and structural units derived from (meth)acrylic acid alkyl ether in an amount of 0.5 to 5 mass %,
30 to 200 parts by mass of a carbon black having an arithmetical mean particle diameter, as determined according to JIS Z8901, of 20 to 30 nm and a DBP oil absorption of 70 to 130 ml/100 g, and
0.1 to 5 parts by mass of an imidazole compound as crosslinking agent.

2. The bladder for tire vulcanization according to Claim 1, wherein the acrylic rubber further comprises structural units derived from ethylene in an amount of 2.5 mass % or less.

3. The bladder for tire vulcanization according to Claim 1 or 2, wherein the acrylic rubber composition comprises at least one antioxidant agent selected from amine- and phosphorus-based antioxidant agents in an amount of 0.1 to 10 parts by mass with respect to 100 parts by mass of the acrylic rubber.

4. The bladder for tire vulcanization according to Claim 3, wherein the antioxidant agent is at least one compound selected from 4,4'-α,α-dimethylbenzyldiphenylamine, tris(nonylphenyl)phosphite, triisodecyl phosphite, and dilauryl thiodipropionate.

5. The bladder for tire vulcanization according to any one of Claims 1 to 4, wherein the (meth)acrylic acid alkyl ether is at least one compound selected from glycidyl methacrylate, glycidyl acrylate, allyl glycidyl ether, and methallyl glycidyl ether.

6. The bladder for tire vulcanization according to any one of Claims 1 to 5, wherein 50 to 100 mass % of the entire structural units derived from the (meth)acrylic acid alkyl ester in the acrylic rubber is structural units derived from methyl or ethyl acrylate.

7. The bladder for tire vulcanization according to Claim 6, wherein the acrylic rubber comprises structural units derived from n-butyl acrylate in an amount in the range of 50 mass % or less with respect to the total mass of the structural units derived from the (meth)acrylic acid alkyl ester.
